Europäisches Patentamt

European Patent Office

Office européen des brevets

(11) Veröffentlichungsnummer: **0 503 134 A2**

# EUROPÄISCHE PATENTANMELDUNG

(21) Anmeldenummer: **91116380.6**

(22) Anmeldetag: **26.09.91**

(51) Int. Cl.5: **B23D 15/06**, B23D 35/00

(30) Priorität: **13.03.91 DE 4108041**

(43) Veröffentlichungstag der Anmeldung:
**16.09.92 Patentblatt 92/38**

(84) Benannte Vertragsstaaten:
**AT BE FR GB**

(71) Anmelder: **BWG BERGWERK- UND WALZWERK-MASCHINENBAU GMBH**
**Mercatorstrasse 74-76**
**W-4100 Duisburg 1(DE)**

(72) Erfinder: **Noé, Oskar, Dipl.-Ing.**

Eintrachtstrasse 44
W-4330 Mülheim/Ruhr(DE)
Erfinder: **Schwerdt, Wilhelm, Dipl.-Ing.**
Am Mühlenturm 101
W-4234 Alpen(DE)
Erfinder: **Ulbricht, Dietmar, Dipl.-Ing.**
Hoogefeldstrasse 56
W-4236 Hamminkeln(DE)

(74) Vertreter: **Honke, Manfred, Dr. et al**
**Patentanwälte Andrejewski, Honke & Masch**
**Theaterplatz 3 Postfach 10 02 54**
**W-4300 Essen 1(DE)**

(54) **Vorrichtung zum Schneiden von Blechen und insbesondere Metallbändern.**

(57) Es handelt sich um eine Vorrichtung zum Schneiden von Blechen mit einem Doppelschneid-Werkzeug mit zwei Außenmessern und einem unter Bildung von zwei Schneidspalten zwischen die Außenmesser eintauchenden Innenmesser, wobei die Außenmesser zum Einstellen der Schneidspalte mittels Stellkeilen zueinander synchron oder asynchron um das jeweils gleiche oder ein unterschiedliches Maß verstellbar sind. Ferner sind die beiden Außenmesser gegen die Stellkeile für den Schneidvorgang verspannbar. Dieses Doppelschneid-Werkzeug erzeugt kantengerade Schnitte.

Fig. 1

Die Erfindung betrifft eine Vorrichtung zum Schneiden von Blechen und insbesondere Metallbändern.

Beim Schneiden von Blechen und insbesondere Metallbändern werden häufig besonders genaue, kantengerade Schnitte verlangt. Das gilt beispielsweise beim Stumpfschweißen von Blechtafeln oder den Bandenden miteinander zu verbindender Metallbänder mittels Laserstrahl. In solchen Fällen darf der Spaltstoß regelmäßig 0,1 mm nicht überschreiten. Bei stark unterschiedlichen Materialdicken und Werkstoffqualitäten muß der Schneidspalt unterschiedlich ausgeführt werden, um hinsichtlich der Schnittqualität und Standzeit der Schneidmesser günstige Ergebnisse zu erzielen. Auch eine Reduzierung von Umrüstzeiten und/oder Einschränkung von Investitionskosten bei Einsatz von Wechselwerkzeugen mit unterschiedlich breiten Schneidspalten wird angestrebt. - Hier setzt die Erfindung ein.

Der Erfindung liegt die Aufgabe zugrunde, eine Schneidvorrichtung der eingangs beschriebenen Ausführungsform zu schaffen, welche exakte, kantengerade Schnitte sowie einfache und schnelle Schneidspalteinstellung unter Berücksichtigung einer kompakten und funktionsgerechten Bauweise gewährleistet.

Zur Lösung dieser Aufgabe ist Gegenstand der Erfindung eine Vorrichtung zum Schneiden von Blechen und insbesondere Metallbändern, mit einem Doppelschneidwerkzeug mit zwei Außenmessern und einem unter Bildung von zwei Schneidspalten zwischen die Außenmesser eintauchenden Innenmesser, wobei die Außenmesser zum Einstellen der Schneidspalte mittels Stellkeilen derart zueinander verstellbar sind, daß die beiden Außenmesser mittels der Stellkeile synchron oder asynchron um das jeweils gleiche oder ein unterschiedliches Maß verstellbar sind und die beiden Außenmesser gegen die Stellkeile verspannbar sind. - Diese Maßnahmen der Erfindung haben zur Folge, daß ein Doppelschneid-Werkzeug mit stufenlos einstellbaren Schneidspalten verwirklicht wird, welches die Erzeugung besonders genauer und kantengerader Schnitte gewährleistet. Dabei ist das Einstellen der Schneidspalte in Abhängigkeit von den Materialdicken und Werkstoffqualitäten sowie der verlangten Spaltstöße einfach und schnell möglich. Vorzugsweise erfolgt im Rahmen der Erfindung eine synchrone Verstellung der Außenmesser um das gleiche Maß. Im Zuge der Verstellung werden die Außenmesser vorübergehend von den Stellkeilen gelöst, um für den Schneidvorgang wieder verspannt zu werden.

Weitere erfindungswesentliche Merkmale sind im folgenden aufgeführt. Vorzugsweise sind die Außenmesser selbst keilförmig ausgebildet. Nach einer bevorzugten Ausführungsform der Erfindung ist jedoch vorgesehen, daß die beiden Stellkeile als Zwischenkeile zwischen keilförmigen Widerlagern und den Außenmessern angeordnet sind und mit den Außenmessern planparallele Gleitflächen bilden. Die Stellkeile können als Horizontalkeile oder Vertikalkeile ausgebildet sein. Im Rahmen der Erfindung kann das Doppelschneid-Werkzeug ein Obermesser und zwei Untermesser oder umgekehrt ein Untermesser und zwei Obermesser aufweisen. Zweckmäßigerweise sind die Stellkeile an einen gemeinsamen Stelltrieb angeschlossen, z. B. beidseitig an einem T-förmigen Lagerkopf einer Stellstange wie Kolbenstange, Gewindespindel oder dergleichen. Denn als Stelltrieb eignen sich praktisch alle bekannten Betätigungsvorrichtungen wie beispielsweise Hydraulikzylinder, angetriebene Gewindespindeln usw.. Weiter sieht die Erfindung vor, daß die Außenmesser mittels die Stellkeile mit vorgegebenem Bewegungsspiel durchdringender Spannvorrichtungen gegen die Stellkeile verspannbar sind. Die Verspannung wird lediglich zum Einstellen des Schneidspaltes vorübergehend gelöst. Die Spannvorrichtungen können in den keilförmigen Widerlagern angeordnet sein, wobei die Stellbzw. Zwischenkeile zur Bildung des vorgegebenen Bewegungsspiels Langlöcher für die Durchdringung der Spannvorrichtungen, z. B. für in den Außenmessern verankerte Kolbenstangen von Zylinderkolbenanordnungen, aufweisen. Vorzugsweise sind für jedes Außenmesser mehrere über die Messerlänge verteilte Spannvorrichtungen vorgesehen, um eine möglichst gleichmäßige Verspannung der Außenmesser gegen ihre Stellkeile zu erreichen.

Nach einem Vorschlag der Erfindung mit selbständiger Bedeutung ist vorgesehen, daß der Stelltrieb eine elektronische Stellwegerfassung für die Außenmesser aufweist und unter Zwischenschaltung zumindest eines Rechners und eines Reglers mit einer Blechdicken-Meßvorrichtung gekoppelt ist, und daß der Stelltrieb die Schneidspalte für die jeweils ermittelte Blechdicke automatisch einstellt. Die Blechdicken-Meßvorrichtung ist zweckmäßigerweise in einen Niederhaltestempel für die Bleche bzw. Blechbänder eingebaut. Nachdem beispielsweise ein Blech eingelegt ist, werden zunächst die ohnehin vorhandenen Niederhaltestempel auf das Blech gefahren. Die mittels der Blechdicken-Meßvorrichtung ermittelte Blechdicke in einem der Niederhaltestempel wird zur Ermittlung der Stellwege elektronisch verrechnet. Über den Regler erfolgt dann die Betätigung der Stelltriebe und folglich automatische Einstellung der Schneidspalte. Dazu werden die Stellkeile so weit verfahren, bis die erforderlichen Schneidspalte von z. B. 5 % der Blechdicke erreicht sind. Dazu ist die Verspannung der Außenmesser gelöst. Nach dem Einstellen der Schneidspalte erfolgt das Verspannen der Außenmesser und Stellkeile, so daß die Auslösung des Doppelschnittes, z. B. über einen Druckschalter im Verspannungsdruck-Kreis erfolgen kann. Bei den Spannvorrichtungen für die Außenmesser kann es sich außer Zylinderkolbenanordnungen auch um Federsysteme, Gewinde oder Zusatzkeile handeln. Bevorzugt finden jedoch Hydraulikzylinder bzw. Zylinderkolbenanordnungen Verwendung. Während der Verstellung der Außenmesser wird der Druck in den Hydraulikzylindern allerdings lediglich so weit reduziert, daß die Gleitflächen zwischen den Außenmessern und den Stellkeilen geschlossen bleiben und ein Eindringen von Schmutz vermieden wird.

Im folgenden wird die Erfindung anhand einer lediglich ein Ausführungsbeispiel darstellenden Zeichnung näher erläutert; es zeigen:

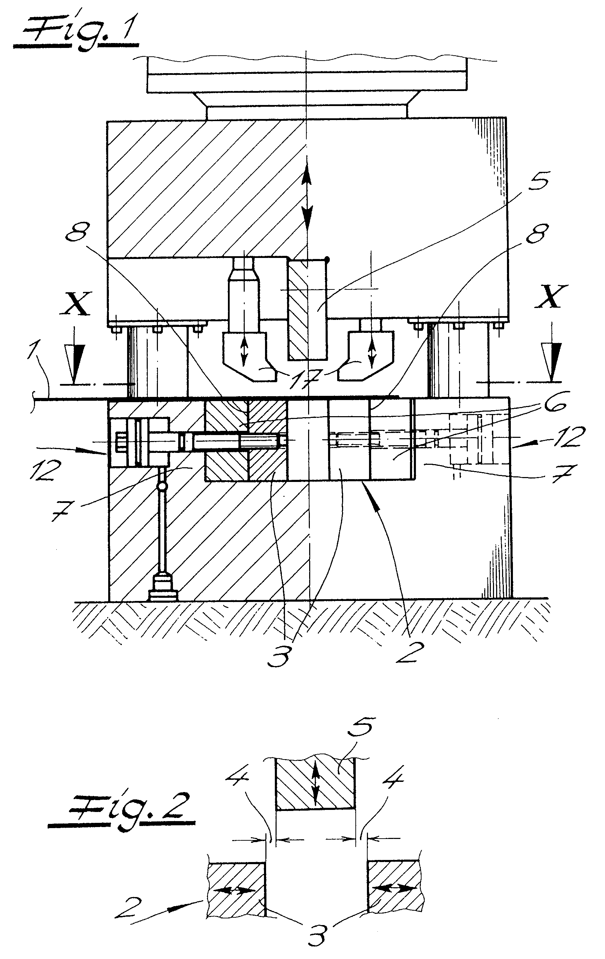

Fig. 1 eine erfindungsgemäße Schneidvorrichtung in schematischer Seitenansicht und teilweisem Vertikalschnitt,

Fig. 2 einen Ausschnitt aus dem Gegenstand nach Fig. 1 im Bereich der Schneidmesser,

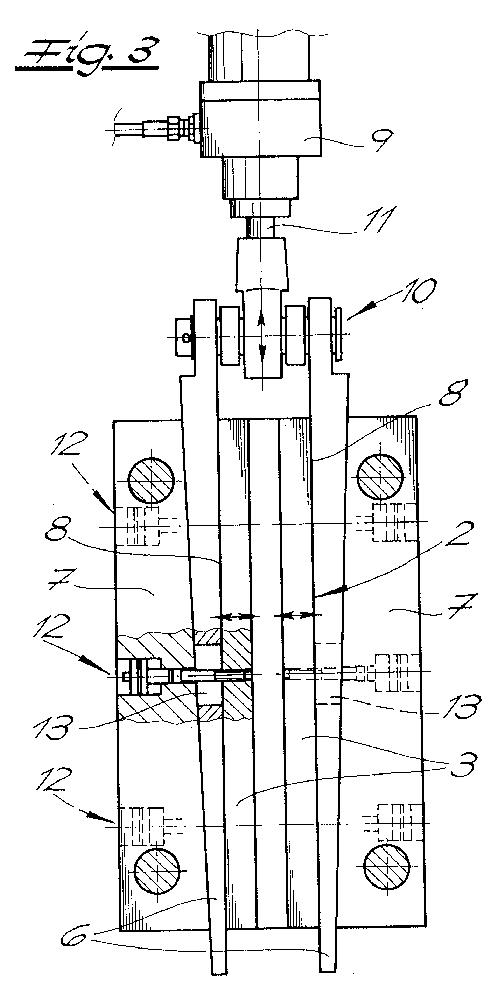

Fig. 3 einen Horizontalschnitt gemäß der Linie X-X durch den Gegenstand nach Fig. 1 und teilweise im Horizontalschnitt und

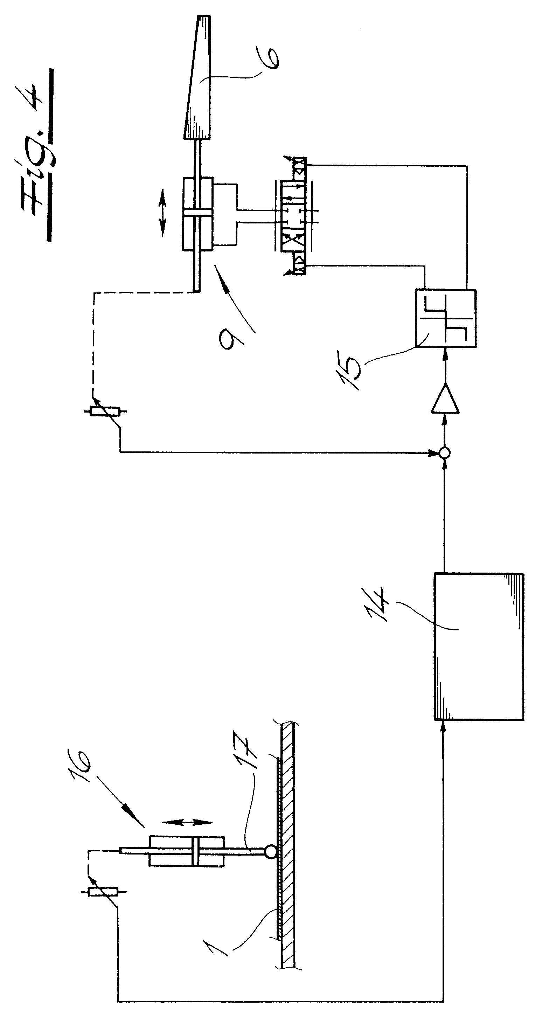

Fig. 4 in schematischer Darstellung die Verstelleinrichtung für die Stellkeile.

In den Figuren ist eine Vorrichtung zum Schneiden von Blechen und insbesondere Metallbändern 1 dargestellt. Diese Schneidvorrichtung weist ein Doppelschneid-Werkzeug 2 mit zwei Außenmessern 3 und einem unter Bildung von zwei Schneidspalten 4 zwischen die Außenmesser 3 eintauchendem Innenmesser 5 auf, wobei die Außenmesser 3 zum Einstellen der Schneidspalte 4 mittels Stellkeilen 6 zueinander verstellbar sind. Die beiden Außenmesser 3 sind mittels der Stellkeile 6 nach dem Ausführungsbeispiel synchron um das jeweils gleiche Maß verstellbar und nach dem Verstellen gegen die Stellkeile 6 verspannbar. Die beiden Stellkeile 6 sind als Zwischenkeile zwischen keilförmigen Widerlagern 7 und den Außenmessern 3 angeordnet. Sie bilden mit den Außenmessern 3 planparallel Gleitflächen 8 und sind als Horizontalkeile ausgeführt. Die Stellkeile 6 sind an einen gemeinsamen Stelltrieb 9 angeschlossen, z. B. beidseitig an einem T-förmigen Lagerkopf 10 einer Stellstange 11 des Stelltriebes 9 gelagert. Bei der Stellstange 11 handelt es sich nach dem Ausführungsbeispiel um die Kolbenstange eines Verstellzylinders. Die Außenmesser 3 sind mittels die Stellkeile 6 mit vorgegebenem Bewegungsspiel durchdringender Spannvorrichtungen 12 gegen die Stellkeile 6 verspannbar. Die Spannvorrichtungen 12 sind in den keilförmigen Widerlagern 7 angeordnet. Die Stell- bzw. Zwischenkeile 6 weisen zur Bildung des vorgegebenen Bewegungsspiels Langlöcher 13 für die Durchdringung der Spannvorrichtungen 12 auf, nach dem Ausführungsbeispiel für in den Außenmessern 3 verankerte Kolbenstangen von Zylinderkolbenanordnungen. Für jedes Außenmesser 3 sind mehrere über die Messerlänge verteilte Spannvorrichtungen 12 vorgesehen.

Der Stelltrieb 9 weist eine elektronische Stellwegerfassung für die Außenmesser 3 auf und ist unter Zwischenschaltung zumindest eines Rechners 14 und eines Reglers 15 mit einer Blechdicken-Meßvorrichtung 16 gekoppelt. Der Stelltrieb 9 stellt die Schneidspalte 4 für die jeweils ermittelte Blechdicke automatisch ein. Die Blechdicken-Meßvorrichtung 16 ist in einem der ohnehin vorhandenen Niederhaltestempel 17 für das jeweilige Blech bzw. Metallband 1 eingebaut.

## Patentansprüche

1. Vorrichtung zum Schneiden von Blechen und insbesondere Metallbändern (1), mit einem Doppelschneid-Werkzeug (2) mit zwei Außenmessern (3) und einem unter Bildung von zwei Schneidspalten (4) zwischen die Außenmesser (3) eintauchenden Innenmesser (5), wobei die Außenmesser (3) zum Einstellen der Schneidspalte (4) mittels Stellkeilen (6) derart zueinander verstellbar sind, daß die beiden Außenmesser (3) mittels der Stellkeile (6) synchron oder asynchron um das jeweils gleiche oder ein unterschiedliches Maß verstellbar sind, und die beiden Außenmesser (3) gegen die Stellkeile (6) verspannbar sind.

2. Vorrichtung nach Anspruch 1, dadurch gekennzeichnet, daß die beiden Stellkeile (6) als Zwischenkeile zwischen keilförmigen Widerlagern (7) und den Außenmessern (3) angeordnet sind und mit den Außenmessern (3) planparallele Gleitflächen (8) bilden.

3. Vorrichtung nach Anspruch 1 oder 2, dadurch gekennzeichnet, daß die Stellkeile (6) als Horizontalkeile oder Vertikalkeile ausgebildet sind.

4. Vorrichtung nach einem der Ansprüche 1 bis 3, dadurch gekennzeichnet, daß die Stellkeile (6) an einen gemeinsamen Stelltrieb (9) angeschlossen sind, z. B. beidseitig an einem T-förmigen Lagerkopf (10) einer Stellstange (11) wie Kolbenstange, Gewindespindel oder dergleichen gelagert sind.

5. Vorrichtung nach einem der Ansprüche 1 bis 4, dadurch gekennzeichnet, daß die Außenmesser (3) mittels die Stellkeile (6) mit vorgegebenem Bewegungsspiel durchdringender Spannvorrichtungen (12) gegen die Stellkeile (6) verspannbar sind.

6. Vorrichtung nach einem der Ansprüché 1 bis 5, dadurch gekennzeichnet, daß die Spannvorrichtungen (12) in den keilförmigen Widerlagern (7) angeordnet sind und die Stell- bzw. Zwischenkeile (6) zur Bildung des vorgegebenen Bewegungsspiels Langlöcher (13) für die Durchdringung der Spannvorrichtungen (12), z. B. für in den Außenmessern (3) verankerte Kolbenstangen von Zylinderkolbenanordnungen, aufweisen.

7. Vorrichtung nach einem der Ansprüche 1 bis 6, dadurch gekennzeichnet, daß für jedes Außenmesser (3) mehrere über die Messerlänge verteilte Spannvorrichtungen (12) vorgesehen sind.

8. Vorrichtung nach einem der Ansprüche 1 bis 7, dadurch gekennzeichnet, daß der Stelltrieb (9) eine elektronische Stellwegerfassung für die Außenmesser (3) aufweist und unter Zwischenschaltung zumindest eines Rechners (14) und eines Reglers (15) mit einer Blechdicken-Meßvorrichtung (16) gekoppelt ist, und daß der Stelltrieb (9) die Schneidspalte (4) für die jeweils ermittelte Blechdicke automatisch einstellt.

9. Vorrichtung nach einem der Ansprüche 1 bis 8, dadurch gekennzeichnet, daß die Blechdicken-Meßvorrichtung (16) in einen Niederhaltestempel (17) eingebaut ist.

*Fig.1*

*Fig.2*

Fig. 3

Fig. 4